# EUROPEAN PATENT SPECIFICATION

(11) **EP 3 261 745 B1**
(45) Date of publication and mention of the grant of the patent: **19.12.2018**
(21) Application number: 16714533.3
(22) Date of filing: 26.02.2016
(51) Int. Cl.: B01D 45/12, B01D 46/00, B01D 50/00, F25B 43/02

(54) **OIL SEPARATOR FOR REFRIGERATION AND/OR AIR CONDITIONING PLANTS**
ÖLTRENNER FÜR KÜHL- UND/ODER KLIMATISIERUNGSANLAGEN
SÉPARATEUR D'HUILE POUR USINES DE RÉFRIGÉRATION ET/OU DE CLIMATISATION

(30) Priority: 27.02.2015 IT UD20150025
(43) Date of publication of application: 03.01.2018
(73) Proprietor: Dena Line S.p.A., 33170 Pordenone (IT)
(72) Inventor: AVANZINI, Mauro, 33170 Pordenone (IT)
(74) Representative: Petraz, Davide Luigi
(86) International application number: PCT/IB2016/051071
(87) International publication number: WO 2016/135692

(56) References cited:
- US-A- 5 676 717
- US-A1- 2001 005 986
- US-A1- 2004 065 110
- US-A1- 2010 300 051

## Description

### FIELD OF THE INVENTION

The present invention concerns an oil separator for refrigeration and/or air conditioning plants, able to eliminate drops of oil from a flow of a fluid.

In particular, the separator can be applied, for example but not only, for the removal of oil from a refrigeration fluid containing carbon dioxide used as a heat-carrier fluid in a refrigeration cycle to cool and/or condition the air of a room.

### BACKGROUND OF THE INVENTION

Refrigeration plants and circuits are known, used for cooling air in closed or partly closed rooms or spaces.

Such plants use a heat-carrier fluid, for example a halogenated fluid such as Freon, or a fluid containing carbon dioxide which, passing through a refrigeration circuit, is subjected to one or more changes of state, guaranteeing the desired refrigeration and/or conditioning.

The thermodynamic cycle established in the circuit normally comprises at least a compression step, by means of which the heat-carrier fluid is taken to optimum conditions to pass from an aeriform phase, determined by the absorption of heat from the space to be cooled and/or conditioned, to a liquid phase, with the consequent emission of a flow of latent heat into the external environment.

One disadvantage of such circuits is the possibility of oil being drawn by the heat-carrier fluid into the different units that form the refrigeration circuit, located downstream of the compression system: the drops of oil can change the overall performance of the whole refrigeration plant.

To reduce this disadvantage, units are known for the separation of oil from the refrigeration fluid, which can generally be classified into two main categories, i.e. cyclonic systems and coalescent filter systems.

Known cyclonic systems are characterized by a geometric conformation, generally cylindrical, able to receive, for example with a tangential entrance, a mixed flow of oil and refrigeration fluid in a gaseous state, the geometric conformation allowing to impart a spiral or vortical motion to the entering fluid.

In this way, the centrifugal force that is created, and the greater inertia, or the weight of the oil with respect to that of the refrigeration fluid, allow to obtain the desired separation. In particular, the drops of oil, impacting against the walls of the cyclonic unit, are separated from the refrigeration fluid and subsequently fall into the lower part of the unit where they are collected in a suitable zone, while the gaseous flow exits substantially without the oil contained at entrance.

One disadvantage of this known solution is the high costs of the cyclonic system, which reduce possible applications.

On the contrary, coalescent filter systems are based on the principle of filtering the entering flow, which filtration is carried out by setting a passage of the gas and oil normally from the bottom upward, with a predetermined speed of passage, generally about 0.5 m/s.

In this way, it is possible to promote a coalescence process of the drops of oil which, tending to agglomerate, can be retained more easily by the filter and thus separate from the gaseous flow.

One disadvantage of this known solution is the non-optimum efficiency of the removal of the drops of oil from the refrigeration fluid overall obtained using coalescence filters, since coalescence filters tend to get blocked and require replacement.

Oil separators for refrigeration and/or air conditioning plants are also known that comprise an external casing, a channel through which the gaseous flow to be treated enters, connected to the external casing, a filtering element disposed in the transit path of the gaseous flow, an exit for the purified gaseous flow made in the external casing, and a lower zone where the oil or other particles, separated from the gaseous flow, are collected. Such oil separators also comprise a passage pipe connected to the entrance channel of the gaseous flow and to the filtering element, and a deflection pipe, disposed around the passage pipe and defining an exit zone of the gaseous flow.

Although they are efficient in the case of refrigeration fluids like Freon for example, these known solutions are not, however, equally efficient if the refrigeration fluid is a carbon dioxide based refrigeration fluid.

Solutions are known which combine a cyclonic system with a coalescent system, generally designed to separate a gas from a liquid.

Document US 2010/0300051 describes a centrifuge separator with a non-return valve to isolate the centrifugal separation portion from the fine separation filter. In the upper part of the separator there is a minimum pressure valve to pick up the portion of gas separated from the particles of oil. In this separator the lighter drops of oil, separated in the upper part, flow in counter-current with respect to the flow of gas to be filtered, passing through the non-return valve.

Document US 2001/005986 describes a centrifuge separator inside which a gas transit pipe is installed, provided with an annular separation plate disposed on the external surface of the pipe.

The annular separation plate is configured to separate the gas from the liquid, blocking or slowing down the latter so that it can then be collected from the bottom of the cyclonic separator.

If the fluid is a carbon dioxide based fluid, neither of the solutions described in these documents allows an efficient and complete separation of the liquid from the gas.

In fact, carbon dioxide is particularly similar to oil or also to other similar liquids.

Therefore, especially when the drops of oil are small, and hence lighter, these known solutions, although they provide a non-return valve or a separation plate before the filter system, do not allow to obtain at exit from the separator a gas that is substantially without particles of liquid.

One purpose of the present invention is to obtain an oil separator for refrigeration and/or air conditioning plants that can obtain a great removal of the oil from the refrigeration fluid even if a refrigeration fluid containing carbon dioxide is used.

Another purpose of the present invention is to obtain an oil separator for refrigeration and/or air conditioning plants that entails low costs of both production and management.

Another purpose of the present invention is to obtain an oil separator for refrigeration and/or air conditioning plants that can obtain a high performance in the removal of oil, at the same time guaranteeing limited times.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

According to the above purposes, the present invention concerns an oil separator, to separate oil and/or other liquid or solid impurities similar to oil, to which we will mainly refer hereafter, for refrigeration and/or air conditioning plants.

According to the present invention, the oil separator for refrigeration and/or air conditioning plants comprises an external casing, an entrance channel for the gaseous flow to be treated, connected to the external casing, a filtering element, disposed in the travel of the gaseous flow, an exit for the purified gaseous flow, a collection zone for the oil or other particles separated from the gaseous flow, and an exit for the oil.

According to one aspect of the present invention, the separator comprises a cyclonic element, positioned between the entrance channel of the gaseous flow to be treated and the filtering element, and configured to carry out a first step of cyclonic type purification of the gaseous flow to be treated.

The separator also comprises a deflection tube, configured to create an obligatory travel for the gaseous flow, inside which, one after the other, the cyclonic element and the filtering element are positioned. The deflection tube has an upper end closed by a closing element and a lower end that defines an exit aperture for the gaseous flow.

According to some embodiments, the entrance channel can extend as far as inside the cyclonic element, and can have an elbow-shaped end, curved on a horizontal plane and configured so as to set a tangential direction to the gaseous flow to be treated, causing it to impact against internal walls of the cyclonic element so as to follow a vortical travel downward.

In this way, thanks to the acceleration of the particles of the gaseous flow in their vortical motion and to the different inertia of the oil particles, which is greater than that of the lighter gas particles, the drops of oil present in the gaseous flow tend to separate and to fall toward the collection zone below.

The cyclonic element can comprise a filtering element in its lower part, configured to promote the passage of drops of oil toward the bottom, and to allow to divert the normal travel of the flow and to invert its direction, and an exit aperture configured to allow the exiting of the oil from the cyclonic element toward the collection zone below.

According to another aspect of the present invention, the exit aperture of the deflection tube is asymmetrical with respect to the vertical axis of the deflection tube. This, advantageously, facilitates the conveying of the gaseous flow, making it rise upward, inside the space present between the deflection tube and the internal walls of the external casing.

The separator according to the present invention can also comprise a holed dividing plate, located below the lower end of the deflection tube, to complete the separation of the oil from the gas.

According to other characteristics of the present invention, the separator can comprise dividing elements, configured to retain the drops of oil present in the gaseous flow; the dividing elements have a discoidal shape and comprise at least a holed dividing element and/or an oil retaining element.

In this way, advantageously, the gaseous flow is guided along a non-linear travel inside the oil separator, undergoing successive changes in direction that promote the further separation of the drops of oil from the gaseous flow thanks to the greater inertia of the former with respect to the latter.

Moreover, since different filtering elements are present, positioned along the travel followed by the gaseous flow, the residual drops of oil can be collected and retained by these elements along the travel, so that drops of oil and/or other impurities have been substantially removed from the flow that arrives at the exit of the gaseous flow.

According to possible embodiments, the separator comprises an exit tube for the gaseous flow, positioned between the upper zone of the separator and the exit of the gaseous flow, and having a substantially elbow-shaped configuration.

According to one aspect of the present invention the separator comprises, in its lower part, below the holed dividing plate, the zone to collect oil, from which the drops of oil can be removed by means of a removal mean, connected with the oil exit cited above.

According to possible embodiments, the separator comprises a maximum level indicator, possibly associated with a discharge electro-valve.

According to possible embodiments, the separator comprises a safety exit tube, connected to the safety exit of the oil and with a sectioned portion of lateral cylindrical wall positioned horizontally in correspondence with the holed dividing plate, with the concavity facing downward, so as to act as a barrier for the oil present in the collection zone, intercepting it and conveying it toward the safety exit of the oil if the oil reaches the level where the safety exit of the oil is positioned.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a section view of an oil separator for refrigeration and/or air conditioning plants according to the present invention;
- fig. 2 is an enlarged schematic representation of part of an oil separator for refrigeration and/or air conditioning plants in fig. 1;
- fig. 3 is a section view along the line III-III in fig. 1.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME EMBODIMENTS

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Embodiments of the invention described here concern an oil separator 10 for refrigeration and/or air conditioning plants, able to treat a gaseous flow such as, for example but not only, a refrigeration fluid containing drops of oil to be removed.

The separator 10 can comprise an external casing 11, in this case substantially cylindrical, defining a longitudinal axis X, an entrance channel 12 for the gaseous flow to be treated, connected to the external casing 11 and with an axis angled with respect to axis X, a filtering element 14, possibly the replaceable type, tubular in shape, an exit 15 for the gaseous flow and at least an exit 16 for the oil.

According to embodiments, the separator 10 also comprises a cyclonic element 18, positioned along the travel of the fluid between the entrance channel 12 for the gaseous flow to be treated and the filtering element 14.

According to some embodiments, the separator 10 also comprises a deflection tube 13, configured to create an obligatory travel for the gaseous flow to be treated, and disposed coaxially with respect to the axis X inside the external casing 11.

According to some embodiments, the deflection tube 13 has a single end defining an open section, in this case in correspondence with a lower end 17.

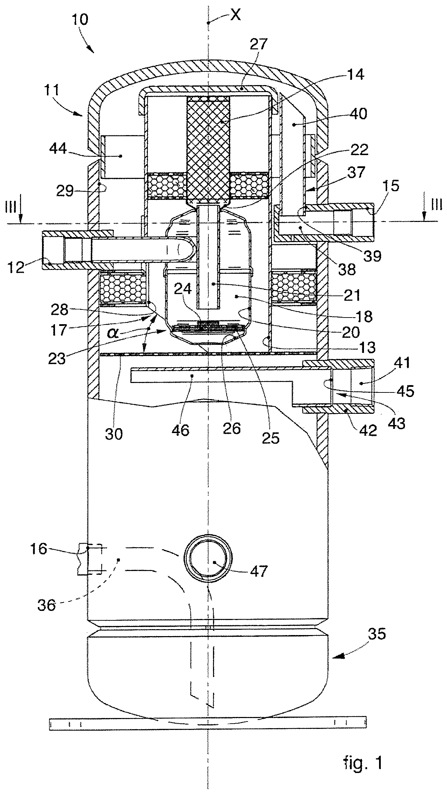

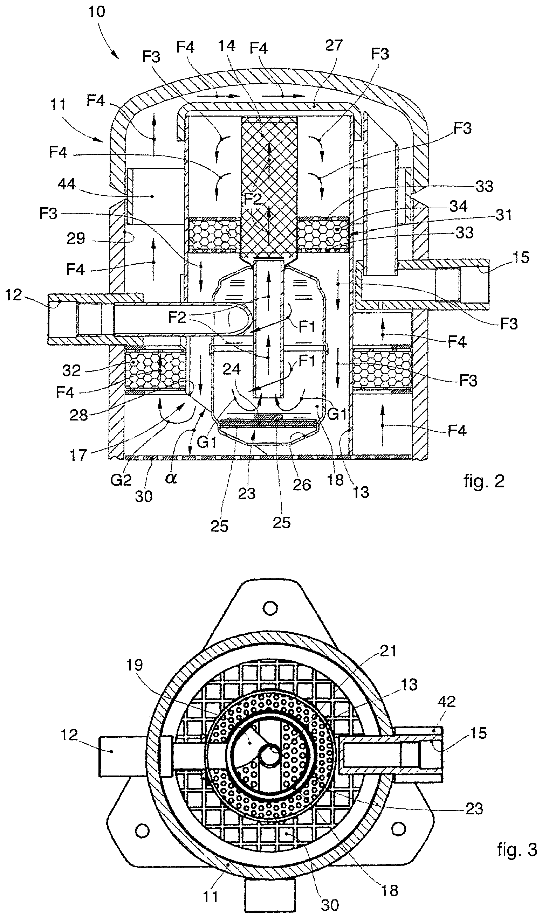

According to embodiments described using figs. 1 and 2, inside the deflection tube 13 the cyclonic element 18 and the filtering element 14 can be positioned one after the other.

The cyclonic element 18 is disposed coaxially inside the deflection tube 13 and has a substantially cylindrical shape, with a diameter smaller than that of the deflection tube 13.

According to some embodiments, the gaseous flow containing oil is introduced inside the separator 10 through the entrance channel 12, for example with a circular section, with a speed generally comprised between about 25 m/s and about 35 m/s, for example 30 m/s.

According to embodiments described here, for example with reference to fig. 2, the entrance channel 12 can extend as far as inside the cyclonic element 18, in correspondence with the upper part thereof. The entrance channel 12 also has an elbow-shaped end 19 (fig. 3), curved on a horizontal plane and configured so as to set a tangential direction to the gaseous flow, causing it to impact against the internal walls 20 of the cyclonic element 18 and to follow a vortical travel around axis X, indicated by arrows F1 (fig. 2).

According to embodiments described using figs. 1 and 2, an intermediate deflection tube 21 is provided, configured to put the cyclonic element 18 in communication with the filtering element 14.

In particular, the intermediate deflection tube 21 is disposed inside the cyclonic element 18, and extends until more than half of the height of the cyclonic element 18.

In embodiments described here, in correspondence with the upper end of the intermediate deflection tube 21, a filter-holder 22 can be provided, intended to support the filtering element 14 and to connect it to the intermediate deflection tube 21.

The cyclonic element 18 comprises, in its lower part, a filtering element 23, configured to facilitate the passage of the drops of oil downward, and to allow to divert the normal travel of the flow and invert its direction. The gaseous flow therefore passes from a vortical motion around axis X to a motion substantially parallel to axis X, according to the direction of inversion indicated by arrow G1 (fig. 2).

According to some embodiments, the filtering element 23 can comprise at least a filter disc 24, made of material suitable to retain the drops of oil and at least a holed disc 25, for example made of metal sheet, configured so as to allow the drops of oil retained by the filter disc 24 to pass to the bottom of the cyclonic element 18.

According to a possible variant, described using figs. 1 and 2, a single filter disc 24 can be provided, enclosed between two holed discs 25.

According to some embodiments, in correspondence with the bottom, the cyclonic element 18 comprises an exit aperture 26 configured to allow the oil to exit from the cyclonic element 18 to the lower part of the separator 10.

The flow of gas to be treated is therefore subjected, as it enters into the cyclonic element 18 at a tangential direction, to a centrifugal acceleration which takes it to circulate in a spiral motion. This, together with the inertia of the drops of oil which is greater than that of the particles of gas, allows a first step of purifying and separating the drops of oil, which tend to fall toward the filtering element 23. On the contrary, the particles of gas, since they are lighter, tend to rise internally, according to the travel indicated by arrows F2, expanding in the intermediate deflection tube 21 toward the filtering element 14.

According to some embodiments, the filtering element 14 can comprise a micro-holed filtering mesh, for example rhomboid in shape, with a diameter of the holes less than about 1 mm, for example comprised between about 0.3 mm and about 0.5 mm, in particular about 0.4 mm. The size of the holes must be such as to allow to retain most of the drops of oil still present in the gaseous flow, but preventing high losses of load as the gaseous flow passes through the mesh.

Therefore, by filtering through the filtering element 14 a second purification step is obtained.

According to some embodiments, the filtering element 14 extends from the cyclonic element 18 to the upper part of the deflection tube 13. In correspondence with the upper part of the tube a closing element 27 can be provided, with the function of a stopper, to prevent the gaseous flow from returning upward, thus setting a downward travel for the flow.

Following filtration, the gaseous flow follows the travel indicated by arrows F3 in fig. 2 and then flows again downward inside the deflection tube 13 and subsequently is conveyed outside the deflection tube 13 by means of the lower end 17.

In the downward travel of the gaseous flow, the drops of oil in it can advantageously separate from the particles of gas thanks to the gravitational force and greater inertia of the drops of oil compared to the particles of gas.

In embodiments described here with reference to figs. 1 and 2, the lower end 17 of the deflection tube 13 can be made non-symmetrical to axis X.

In particular, the lower end 17 can be provided with an exit aperture 28 obtained by intersection of the deflection tube 13 and a plane inclined by an angle α with respect to axis X of the external casing 11 which coincides with that of the deflection tube 13. The angle α can be comprised between about 30° and about 60°, preferably between about 40° and about 50°, for example about 45°.

The gaseous flow is then sent to the lower part of the separator 10 through the lower end 17, in which the exit aperture 28 allows to divert the normal travel of the gaseous flow, about parallel to axis X, in the direction indicated in fig. 3 by an arrow G2, making a substantially elbow-shaped inversion of the gaseous flow.

The gaseous flow can then rise, following the travel indicated by arrows F4 inside the internal walls 29 of the external casing 11, heading toward the top of the external casing 11 and toward the exit of the gaseous flow 15.

In this way, it is possible to obtain a further purification, exploiting the greater inertia of the drops of oil compared with that of the gaseous flow: in fact, since they cannot follow the same travel as the gaseous flow because they are heavier, they impact against internal walls 29 of the external casing 11, and fall downward, separating from the gaseous flow.

According to embodiments described using figs. 1 and 2, the separator 10 also comprises a holed dividing plate 30, located under the lower end 17 of the deflection tube 13, to complete the separation of the oil from the gas.

The holed dividing plate 30 can have a group of holes with a diameter comprised between about 1 mm and about 2 mm, for example about 1.5 mm and is configured to prevent the gas being drawn toward the bottom of the separator 10 by the separated drops of oil.

In some embodiments, combinable with all the embodiments described here, the separator 10 also comprises at least one dividing element 31, 32, positioned along the travel followed by the gaseous flow to be treated.

According to embodiments described here using figs. 1 and 2, two dividing elements 31, 32 are provided, each of which has a discoidal shape and can comprise a succession of elements disposed one on the other. Between the elements that make up the dividing elements 31, 32, at least one holed dividing element 33 and/or an oil retaining element 34 can be provided.

According to some embodiments, the oil retaining element 34 can be inserted between two holed dividing elements 33.

Like the holed dividing plate 30, the holed dividing element 33 can also be equipped with a group of holes with a diameter comprised between about 1 mm and about 2 mm, for example about 1.5 mm, so as to allow the particles of gas to pass, retaining the particles of oil thanks to coalescence phenomena.

The oil retaining element 34 can comprise a micro-holed filtering mesh, for example rhomboid in shape, with a diameter of the holes less than about 1 mm, for example comprised between about 0.3 mm and about 0.5 mm, in particular about 0.4 mm.

According to some embodiments, the dividing element 31 can be disposed coaxially with respect to axis X in correspondence with the lower part of the filtering element 14, between the filtering element 14 and the internal walls 20 of the deflection tube 13.

On the contrary, the holed dividing element 32 can be disposed coaxially to axis X in correspondence with the lower end 17, in particular the upper section, between the deflection tube 13 and the internal walls 29 of the external casing 11.

In this way, the gaseous flow in the segments of travel indicated by arrows F3 and F4 passes through the dividing elements 31, 32, and in this way is further purified, because the particles of oil and other impurities are retained by the oil retaining elements 34.

The drops of oil that have separated from the gaseous flow during the travel described above tend to collect, due to gravity, toward the bottom of the separator 10, in particular, with reference to fig. 1, they can deposit in a collection zone 35.

According to some embodiments, the oil can then be removed by means of a suitable removal mean 36 and expelled through the oil exit 16.

The removal mean 36 can be for example a curved draw pipe, with an oblique final section, which takes the oil from the collection zone 35 and transfers it outside the separator 10 through said oil exit 16.

According to some embodiments, combinable with all the embodiments described here, the separator 10 comprises a gaseous flow exit tube 37, between the upper zone of the separator 10 and the gaseous flow exit 15.

According to embodiments described using figs. 1 and 2, the gaseous flow exit tube 15 can be provided in a lateral position, for example above the entrance channel 12, so that the gaseous flow exit tube 37 has a substantially elbow-shaped configuration.

According to some embodiments, the upper end of the gaseous flow exit tube 37 has an oblique section, oriented so as to promote the entrance of the gaseous flow into the gaseous flow exit tube 37. In this way, the gaseous flow follows the travel indicated by arrows F4 and rises upward, and is subsequently diverted by the upper internal wall 29 of the external casing 11.

According to some embodiments, the gaseous flow exit tube 37 can comprise a tube 38 disposed in a horizontal position and with a lateral hole 39 in which a straight draw pipe 40 can be inserted, disposed in a vertical position.

According to a variant, the gaseous flow exit tube 37 can be made with a curved draw pipe.

According to some embodiments, combinable with all the embodiments described here, the separator 10 can comprise a maximum level indicator 41, configured to detect whether the oil deposited in the collection zone 35 has reached a determinate maximum level.

The maximum level indicator 41 can be, for example, an electric or electronic sensor, possibly associated with an electro valve, configured to activate the removal mean 36 to discharge the oil deposited in the collection zone 35 through the oil exit 16.

A control unit can also be present, which serves and verifies the functioning of the indicator 41 and the electro valve, and determines the activation thereof when necessary.

According to some embodiments, combinable with all the embodiments described here, a sleeve 42 can be provided, mounted on the external casing 11 and positioned in proximity to the holed dividing plate 30, in particular below it.

The sleeve 42 can be configured to create a communication between the internal part and external part of the external casing 11, and to provide support to the maximum level indicator 41, which can be connected to the end of the sleeve 42 protruding outside the external casing 11, for example inserted or screwed into it.

According to some embodiments, combinable with all the embodiments described here, the separator 10 also comprises a protection element 43, connected to the sleeve 42, for example inserted or screwed into the end of the sleeve 42 protruding inside the collection zone 35 of the sleeve 42.

The protection element 43 is configured so as to protect the maximum level indicator 41, preventing it from being hit by splashes of oil that could compromise its functioning.

The protection element 43 can be a straight draw pipe for example, disposed in a horizontal position and sectioned so as to have one end 45 cylinder shaped, connected to the sleeve 42, and a sectioned portion 46 of the lateral cylindrical wall in the part extending in a direction opposite the sleeve 42.

The end 45 can advantageously be closed, so as not to allow the oil to pass through it.

In particular, the sectioned portion 46 consists of a cylindrical sector of the protection element 43, sectioned in a longitudinal direction.

According to some embodiments, the sectioned portion 46 is positioned in correspondence with the holed dividing plate 30, with the concavity facing downward, so as to function as a barrier against the oil in the collection zone 35, intercepting it and preventing it from passing toward the maximum level indicator 41.

In this way, thanks to the maximum level indicator 41, the upper part of the separator 10, and in particular the cyclonic element 18, the filtering element 14 and the dividing elements 31, 32 are preserved, preventing them from entering into contact with the oil already collected.

According to some embodiments, combinable with all the embodiments described here, the separator 10 can comprise a ring-shaped bracket 44, configured to support the deflection tube 13 and to keep it in position with respect to the external casing 11.

According to some embodiments, combinable with all the embodiments described here, the separator 10 can also comprise a control aperture 47, for example a bushing closed externally by a glass, through which it is possible to look inside the external casing 11. The control aperture 47 can be used in particular by a maintenance worker to control the state of the apparatus, in particular the minimum level of oil in the separator.

It is clear that modifications and/or additions of parts may be made to the oil separator for refrigeration and/or air conditioning plants as described heretofore, without departing from the field and scope of the present invention.

It is also clear that, although the present invention has been described with reference to some specific examples, a person of skill in the art shall certainly be able to achieve many other equivalent forms of oil separator for refrigeration and/or air conditioning plants, having the characteristics as set forth in the claims and hence all coming within the field of protection defined thereby.

## Claims

1. Oil separator for refrigeration and/or air conditioning plants comprising an external casing (11), an entrance channel (12) connected to said external casing (11), a filtering element (14), disposed in the travel of the gaseous flow, an exit for the purified gaseous flow (15) and a collection zone (35) for the oil or other particles separated from said gaseous flow, and a cyclonic element (18), positioned between said entrance channel (12) of the gaseous flow to be treated and said filtering element (14), and configured to carry out a first step of purifying said gaseous flow to be treated, **characterized in that** it comprises a deflection tube (13) inside which, one after the other, along the travel of flow, said cyclonic element (18) and said filtering element (14) are positioned, said deflection tube (13) being configured to impose on the gaseous flow coming from said filtering element (14) a travel from the top downward, **and in that** it also comprises an intermediate tube (21) disposed inside said cyclonic element (18), and supporting in correspondence to its upper end said filtering element (14), in order to transport the gaseous flow, subjected to the first purification of the cyclonic element (18), toward the filtering element (14) to be subjected to a second purification step.

2. Separator as in claim 1, **characterized in that** said entrance channel (12) extends as far as inside said cyclonic element (18), said entrance channel (12) having an elbow-shaped end (19), curved on a horizontal plane and configured so as to set a tangential direction to said gaseous flow to be treated, causing it to impact against internal walls (20) of said cyclonic element (18) and to follow a vortical travel.

3. Separator as in claim 1 or 2, **characterized in that** said cyclonic element (18) comprises, in the lower part, a filtering element (23), configured to facilitate the downward passage of the drops of oil, and to allow to divert the normal travel of the flow and invert its direction, said filtering element (23) comprising at least a filtering disc (24) and at least a holed disc (25).

4. Separator as in any claim hereinbefore, **characterized in that** said cyclonic element (18) comprises, in correspondence with the bottom, an exit aperture (26) configured to allow the oil to exit from the cyclonic element (18) toward said collection zone (35).

5. Separator as in claim 1, **characterized in that** said deflection tube (13) has an exit aperture (28) asymmetric with respect to a longitudinal axis (X) of the deflection tube (13), and is obtained by an intersection of the deflection tube (13) and of a plane inclined by an acute angle (α) with respect to the axis (X) of the deflection tube (13).

6. Separator as in claim 1, **characterized in that** it comprises a holed dividing plate (30), with the function of separator, located under said deflection tube (13).

7. Separator as in any claim hereinbefore, **characterized in that** it comprises several separator elements (31, 33, 34), located downstream of said cyclonic element (18) along the travel of the flow and configured to retain the drops of oil present in said gaseous flow.

8. Separator as in claim 5, **characterized in that** it comprises further separator elements (32), located downstream of said exit aperture (28) along the travel of flow and configured to retain the drops of oil present in said gaseous flow.

9. Separator as in any claim hereinbefore, **characterized in that** it comprises a gaseous flow exit tube (37), positioned between the upper zone of the separator (10) and said gaseous flow exit (15), said gaseous flow exit tube (37) having a substantially elbow-shaped configuration.

10. Separator as in any claim hereinbefore, **characterized in that** said collection zone (35) is associated with a removal mean (36) for the discharge of the oil.

11. Separator as in any claim hereinbefore, **characterized in that** it comprises a maximum level indicator (41), mounted on said external casing (11), and associated with a protection element (43) protruding at least partially inside said external casing (11).

## Patentansprüche

1. Ölabscheider für Kühl- und/oder Klimaanlagen, umfassend ein Außengehäuse (11), einen mit dem Außengehäuse (11) verbundenen Eintrittskanal (12), ein Filterelement (14), welches in dem Weg des Gasstroms angeordnet ist, einen Ausgang für den gereinigten Gasstrom (15) und eine Sammelzone (35) für das Öl oder andere Partikel, die von dem Gasstrom getrennt sind, und ein zyklonisches Element (18), das zwischen dem Eintrittskanal (12) des zu behandelnden Gasstroms und dem Filterelement (14) angeordnet ist und dazu eingerichtet ist, einen ersten Schritt zur Reinigung des zu behandelnden Gasstroms durchzuführen, **dadurch gekennzeichnet, dass** er ein Umlenkrohr (13) aufweist, in welchem das zyklonisches Element (18) und das Filterelement (14) hintereinander, entlang der Strecke des Stroms angeordnet sind, wobei das Umlenkrohr (13) dazu ausgebildet ist, dem von dem Filterelement (14) kommenden Gasstrom eine Bewegung von oben nach unten aufzuerlegen, **und dass** er auch einen dazwischenliegendes Rohr (21) umfasst, welches innerhalb des zyklonischen Elements (18) angeordnet ist und welches das Filterelement (14) durch sein oberes Ende stützt, um den Gasstrom, welcher der ersten Reinigung des zyklonisches Element (18) unterzogen wurde, in Richtung des Filterelements (14) zu transportieren, um einem zweiten Reinigungsschritt unterzogen zu werden.

2. Abscheider nach Anspruch 1, **dadurch gekennzeichnet, dass** der Eintrittskanal (12) sich bis in das zyklonisches Element (18) erstreckt, wobei der Eintrittskanal (12) ein ellenbogenförmiges Ende (19) aufweist, das in einer horizontalen Ebene gekrümmt ist und dazu ausgebildet ist, des zu behandelnden Gasstroms eine tangentiale Richtung zuzuweisen, wodurch bewirkt wird, dass sie gegen Innenwände (20) des zyklonischen Elements (18) stößt und einer Wirbelbewegung folgt.

3. Abscheider nach Anspruch 1 oder 2, **dadurch gekennzeichnet, dass** das zyklonische Element (18) im unteren Teil ein Filterelement (23) aufweist, welches dazu ausgebildet ist, den Durchtritt der Öltropfen nach unten zu ermöglichen, und zu ermöglichen, die normale Bewegung des Stroms abzulenken und in ihrer Richtung umzukehren, wobei das Filterelement (23) mindestens eine Filterscheibe (24) und mindestens eine gelöcherte Scheibe (25) aufweist.

4. Abscheider nach einem der vorhergehenden Ansprüche, **dadurch gekennzeichnet, dass** das zyklonische Element (18) eine Austrittsöffnung (26), welche einen Bezug zum Boden hat, aufweist, die so ausgebildet ist, dass das Öl aus dem zyklonischen Element (18) in Richtung der Sammelzone (35) austreten kann.

5. Abscheider nach Anspruch 1, **dadurch gekennzeichnet, dass** das Umlenkrohr (13) eine Austrittsöffnung (28) aufweist, die asymmetrisch in Bezug auf eine Längsachse (X) des Umlenkrohrs (13) ist und durch einen Schnitt des Umlenkrohrs (13) und einer um einen spitzen Winkel (α) gegenüber der Achse (X) des Umlenkrohrs (13) geneigten Ebene erhalten wird.

6. Abscheider nach Anspruch 1, **dadurch gekennzeichnet, dass** er eine gelochte Trennplatte (30) mit der Funktion eines Separators aufweist, die sich unter dem Umlenkrohr (13) befindet.

7. Abscheider nach einem der vorhergehenden Ansprüche, **dadurch gekennzeichnet, dass** er mehrere Abscheideelemente (31, 33, 34) umfasst, die stromabwärts des zyklonischen Elements (18) entlang des Wegs des Stroms angeordnet sind und dazu ausgebildet sind, die Öltropfen zurückzuhalten die in dem Gasstrom vorhandenen sind.

8. Abscheider nach Anspruch 5, **dadurch gekennzeichnet, dass** er weitere Abscheideelemente (32) umfasst, die stromabwärts der Austrittsöffnung (28) entlang des Wegs des Stroms angeordnet sind und dazu ausgebildet sind, die Öltropfen zurückhalten die in dem Gasstrom vorhandenen sind.

9. Abscheider nach einem der vorhergehenden Ansprüche, **dadurch gekennzeichnet, dass** er ein Gasstromaustrittsrohr (37) aufweist, welches zwischen der oberen Zone des Abscheiders (10) und dem Gasstromaustritt (15) angeordnet ist, wobei das Gasstromaustrittsrohr (37) eine im Wesentlichen ellbogenförmigen Konfiguration aufweist.

10. Abscheider nach einem der vorhergehenden Ansprüche, **dadurch gekennzeichnet, dass** die Sammelzone (35) mit einem Entnahmemittel (36) zum Ablass des Öls in Verbindung steht.

11. Abscheider nach einem der vorhergehenden Ansprüche, **dadurch gekennzeichnet, dass** er eine Maximalpegelanzeige (41) aufweist, die an dem Außengehäuse (11) angebracht ist und mit einem Sicherungselement (43) in Verbindung steht, das zumindest teilweise innerhalb des Außengehäuses (11) ragt.

## Revendications

1. Séparateur d'huile pour installations de réfrigération et/ou de climatisation comportant un carter externe (11), un canal d'entrée (12) relié audit carter externe (11), un élément filtrant (14), disposé dans la course du flux gazeux, une sortie pour le flux gazeux purifié (15) et une zone de collecte (35) pour l'huile ou d'autres particules séparées dudit flux gazeux, et un élément cyclonique (18) placé entre ledit canal d'entrée (12) du flux gazeux à traiter et ledit élément filtrant (14), et configuré pour réaliser une première étape de purification dudit flux gazeux à traiter, **caractérisé en ce qu'**il comprend un tube de déviation (13) à l'intérieur duquel, l'un après l'autre, le long de la course du flux, ledit élément cyclonique (18) et ledit élément filtrant (14) sont positionnés, ledit tube de déviation (13) étant configuré pour imposer au flux gazeux provenant dudit élément filtrant (14) un déplacement du haut vers le bas, et **en ce qu'**il comporte également un tube intermédiaire (21) disposé à l'intérieur dudit élément cyclonique (18) et supportant en correspondance avec son extrémité supérieure ledit élément filtrant (14) pour transporter le flux gazeux, soumis à la première purification de l'élément cyclonique (18), vers l'élément filtrant (14) pour être soumis à une seconde étape de purification.

2. Séparateur selon la revendication 1, **caractérisé en ce que** ledit canal d'entrée (12) s'étend jusqu'à l'intérieur dudit élément cyclonique (18), ledit canal d'entrée (12) présentant une extrémité en forme de coude (19) incurvée dans un plan horizontal et configurée de manière à donner une direction tangentielle audit flux gazeux à traiter, en l'amenant à heurter des parois internes (20) dudit élément cyclonique (18) et à suivre une course tourbillonnaire.

3. Séparateur selon la revendication 1 ou 2, **caractérisé en ce que** ledit élément cyclonique (18) comprend, dans la partie inférieure, un élément filtrant (23), configuré pour faciliter le passage des gouttes d'huile vers le bas, et pour permettre de dévier la course normale du flux et d'inverser sa direction, ledit élément filtrant (23) comprenant au moins un disque filtrant (24) et au moins un disque perforé (25).

4. Séparateur selon l'une quelconque des revendications précédentes, **caractérisé en ce que** ledit élément cyclonique (18) comprend, en correspondance avec le fond, une ouverture de sortie (26) configurée pour permettre à l'huile de sortir de l'élément cyclonique (18) vers ladite zone de collecte. (35).

5. Séparateur selon la revendication 1, **caractérisé en ce que** ledit tube de déviation (13) présente une ouverture de sortie (28) asymétrique par rapport à un axe longitudinal (X) du tube de déviation (13), et obtenue par une intersection du tube de déviation (13) et d'un plan incliné sur un angle aigu (α) par rapport à l'axe (X) du tube de déviation (13).

6. Séparateur selon la revendication 1, **caractérisé en ce qu'**il comporte une plaque de séparation perforée (30), jouant le rôle de séparateur, située sous ledit tube de déviation (13).

7. Séparateur selon l'une quelconque des revendications précédentes, **caractérisé en ce qu'**il comprend plusieurs éléments séparateurs (31, 33, 34) situés en aval dudit élément cyclonique (18) le long de la course du flux, et configurés pour retenir les gouttes d'huile présentes dans ledit flux gazeux.

8. Séparateur selon la revendication 5, **caractérisé en ce qu'**il comprend des éléments séparateurs supplémentaires (32), situés en aval de ladite ouverture de sortie (28) le long de la course de flux, et configurés pour retenir les gouttes d'huile présentes dans ledit flux gazeux.

9. Séparateur selon l'une quelconque des revendications précédentes, **caractérisé en ce qu'**il comprend un tube de sortie de flux gazeux (37), positionné entre la zone supérieure du séparateur (10) et ladite sortie de flux gazeux (15), ledit tube de sortie de flux gazeux (37) ayant une configuration sensiblement en forme de coude.

10. Séparateur selon l'une quelconque des revendications précédentes, **caractérisé en ce que** ladite zone de collecte (35) est associée à des moyens d'enlèvement (36) pour l'évacuation de l'huile.

11. Séparateur selon l'une quelconque des revendications précédentes, **caractérisé en ce qu'**il comprend un indicateur de niveau maximum (41) monté sur ledit carter externe (11) et associé à un élément de protection (43) faisant saillie au moins partiellement à l'intérieur dudit carter externe (11).
